# EUROPEAN PATENT SPECIFICATION

(11) **EP 2 790 228 B1**
(45) Date of publication and mention of the grant of the patent: **05.07.2017**
(21) Application number: 12855175.1
(22) Date of filing: 27.11.2012
(51) Int. Cl.: H01L 31/04, G01M 11/00

(54) **SOLAR CELL SPECTRAL RESPONSE MEASUREMENT DEVICE**
SPEKTRALREAKTIONSMESSUNGSVORRICHTUNG FÜR SOLARZELLEN
DISPOSITIF DE MESURE DE RÉPONSE SPECTRALE DE CELLULE SOLAIRE

(30) Priority: 05.12.2011 JP 2011266020
(43) Date of publication of application: 15.10.2014
(73) Proprietor: Konica Minolta, Inc., Tokyo 100-7015 (JP)
(72) Inventor: NISHIKAWA, Yoshihiro, Chiyoda-ku, Tokyo 100-7015 (JP)
(74) Representative: Hoffmann Eitle
(86) International application number: PCT/JP2012/007583
(87) International publication number: WO 2013/084441

(56) References cited:
- WO-A1-2010/058649
- WO-A1-2011/068142
- JP-A- S6 376 381
- JP-A- 2004 281 706
- JP-A- 2008 298 471
- US-A1- 2011 246 109
- US-A1- 2011 267 090

## Description

### Technical Field

The present invention relates to a solar cell spectral response measuring apparatus which measures a spectral response of a solar cell to be measured, and particularly to a solar cell spectral response measuring apparatus which measures a spectral response of a solar cell irradiated with bias light.

### Background Art

A solar cell is an element which converts optical energy directly to electric power by utilizing a photovoltaic effect, and various solar cells such as a single crystal silicon solar cell, an amorphous silicon solar cell, a non-silicon solar cell, and an organic compound solar cell have been studied and developed, and have recently come into wide use.

In order to evaluate the performance of such a solar cell, for example, there are provided evaluation methods defined in IEC60904, JIS(C8905-C8991) or like. Among the solar cell evaluation methods, there is a method for measuring a spectral response of a solar cell by the DSR (differential spectral responsivity) method (e.g., refer to Non-Patent Document 1 and Non-Patent Document 2). IEC is an abbreviation of International Electro technical Commission, and JIS is an abbreviation of Japanese Industrial Standards.

The spectral response of a solar cell corresponds to a photoelectric conversion efficiency of the solar cell for incident light thereupon at each wavelength thereof, and is generally expressed in the unit of A/W (ampere/watt) as an output electric current of a solar cell relative to an optical energy coming into the solar cell. Accordingly, a spectral response of a solar cell shows how large amount of output electric current the solar cell generates from incident light thereupon at different wavelengths. This means that the spectral response of a solar cell can be used as an indicator for evaluating the performance of the solar cell.

As an apparatus for measuring a solar cell spectral response, for example, a conventional solar cell spectral response measuring apparatus in accordance with the DSR method is known, in which a solar cell PV to be measured is irradiated with white light as bias light to thereby cause a generation state that the solar cell PV generates an electricity or a biased state, and is further irradiated in the biased state with monochromatic light to thereby measure a response (output electric current) at a wavelength of the monochromatic light. The solar cell spectral response measuring apparatus measures a spectral response of the solar cell PV while changing the wavelength of monochromatic light.

As described above, there are many types of solar cells, and a study was made for various solar cells, and the spectral response of a solar cell was found to be dependent upon the quantity of white bias light, and dependent upon the spectrum of the bias light.

As solar cells become widespread, they are in use under various environments, for example, under an indoor light source such as an incandescent lamp, a fluorescent lamp, and a white LED lamp. For use of a solar cell under such a light source which does not radiate natural sunlight, because the solar cell has a spectral response dependence upon the quantity and spectrum of bias light as described above, the spectral response evaluated under reference sunlight assuming natural sunlight will be likely to have an error.

In Non-Patent Document 1 and Non-Patent Document 2, consideration is given to the fact that the spectral response of a solar cell is dependent upon the energy (quantity) of white bias light. However, only white bias light is used as the bias light. Consideration and presumption are not given to another different bias light from white bias light. Further, Non-Patent Document 2 shows provision of a plurality of light sources. However, they are provided merely to change the quantity of the white bias light.

### Prior Art Documents

### Non-Patent Documents

Non-Patent Document 1: J. Metzdorf, "Calibration of solarcells.1:The differential spectral responsivity method", 1 May 1987/Vol. 26 No. 9 Applied Optics 1701-1708
Non-Patent Document 2: S. Winter, T. Wittchen, J. Metzdorf, "Primary Reference Cell Calibration at the PTB based on an Improved DSR Facility", 16th European Photovoltaic Solar Energy Conference Galsggoo. Documents US2011/0246109A and JP2008298471 are closely related prior art documents.

### Summary of the Invention

In view of the above-mentioned problems, it is an object of the present invention to provide a solar cell spectral response measuring apparatus which can measure a spectral response of a solar cell under bias light including a plurality of radiation spectrums different from one another.

This is achieved by the subject-matter of claim 1. Advantageous embodiments are described in the dependent claims.

For example, a solar cell spectral response measuring apparatus irradiates bias light to a solar cell to be measured; irradiates monochromatic light to the solar cell in such a way that the monochromatic light superimposes on the bias light while changing the wavelength; measures an output of the solar cell at each wavelength; and measures a spectral response of the solar cell on the basis of each of the measured outputs. Further, the solar cell spectral response measuring apparatus according to the present invention is made to be changeable the radiation spectrum of the bias light. Accordingly, the solar cell spectral response measuring apparatus is capable of measuring a spectral response of a solar cell to bias light having one of a plurality of radiation spectrums different from one another.

These and other objects, features and advantages of the present invention will become more apparent upon reading of the following detailed description with reference to the accompanied drawings.

### Brief Description of the Drawings

Fig. 1 is a diagram showing a construction of a solar cell spectral response measuring apparatus according to a first embodiment of the present invention.
Fig. 2 is a graphical representation showing a spectrum of reference sunlight having AM 1.5.
Fig. 3 is a graphical representation showing a spectrum of a white LED lamp and a spectrum of a fluorescent lamp.
Fig. 4 is a flow chart showing the DSR method employed in the solar cell spectral response measuring apparatus.
Fig. 5 is a diagram showing a construction of a solar cell spectral response measuring apparatus according to a second embodiment of the present invention.
Fig. 6 is a diagram showing a basic construction of a solar cell spectral response measuring apparatus in accordance with the DSR method.
Fig. 7 is a graphical representation showing a dependence of the spectral response of a solar cell upon the quantity of white bias light.
Fig. 8 is a graphical representation showing a dependence of the spectral response of a solar cell upon the spectrum of bias light.
Fig. 9 is a graphical representation showing spectral radiation spectrums of bias light.

### Mode for Carrying out the Invention

An embodiment of the present invention will be below described with reference to drawings. In each figure, components given the same reference character or numeral have an identical construction, and thus, description of them is properly omitted. Herein, some components are denoted by a reference numeral without an additional letter when generally described, while denoted by a reference numeral with an additional letter when described as a component of an individual embodiment.

First, the basics of the DSR method are explained, and thereafter the embodiment is described.

### (Basics of the DSR method)

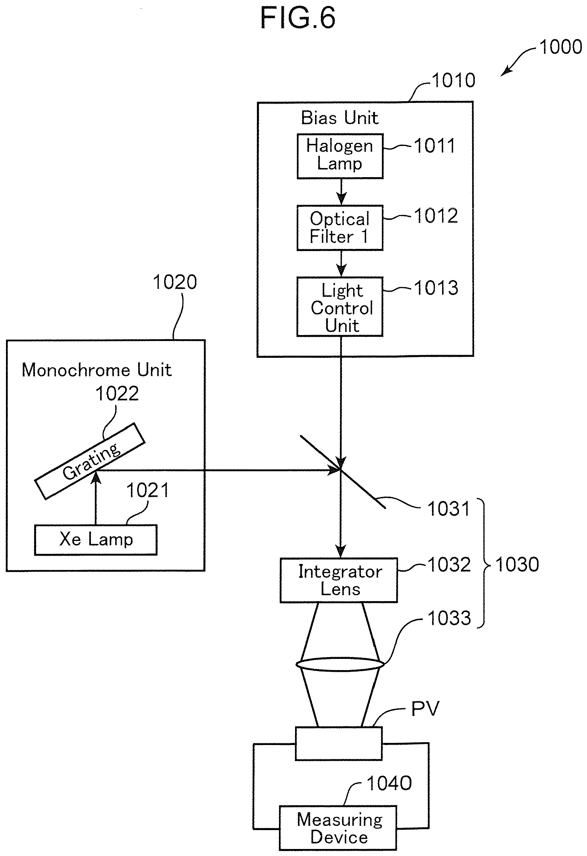

In Fig. 6, a solar cell spectral response measuring apparatus 1000 is an apparatus in which, a solar cell PV to be measured is irradiated with white light as bias light to thereby cause a generation state that the solar cell PV generates an electricity or a biased state, and the solar cell PV is further irradiated with monochromatic light in the biased state to thereby measure a response (output electric current) at a wavelength of the monochromatic light, and then irradiated with monochromatic light at changed wavelengths to thereby measure a spectral response of the solar cell PV. The solar cell spectral response measuring apparatus 1000 includes a white bias unit 1010, a monochrome unit 1020, an irradiating optical system 1030, and a measuring device 1040.

The white bias unit 1010 is a device for irradiating white bias light, and includes, for example, a halogen lamp 1011, an optical filter 1012, and a light control unit 1013. In the white bias unit 1010, for example, to permit the white bias light to be reference sunlight, the optical filter 1012 filters light radiated by the halogen lamp 1011 so as to have a spectrum of natural sunlight having AM 1.5 (Air Mass 1.5). The light control unit 1013 controls the quantity of the filtered light so that the solar cell PV to be measured is irradiated at varied illuminances.

The monochrome unit 1020 is a device for irradiating monochromatic light, for example, a spectroscope, and includes a xenon lamp 1021 and a diffraction grating 1022. In the monochrome unit 1020, in order to generate and emit monochromatic light having a specified wavelength, the diffraction grating 1022 diffracts light radiated by the xenon lamp 1021 to thereby emit diffracted light having an order equivalent to the specified wavelength.

The irradiating optical system 1030 is an optical system for superimposing monochromatic light emitted from the monochrome unit 1020 on the white bias light (reference sunlight) emitted from the white bias unit 1010, and irradiating the superimposed light to the solar cell PV to be measured. The irradiating optical system 1030 includes, for example, a half mirror 1031, an integrator lens 1032, and a condensing optical system 1033. In the irradiating optical system 1030, the half mirror 1031 allows the monochromatic light emitted from the monochrome unit 1020 to superimpose on the white bias light emitted from the white bias unit 1010. The integrator lens 1032 emits the superimposed light in a uniformly distributedillumination. The condensing optical system 1033 condenses the superimposed light having the uniform illuminance distribution to thereby irradiate the solar cell PV to be measured.

The measuring device 1040 is a device for measuring an output electric current of the solar cell PV to be measured. An electric current generated in the solar cell PV owing to irradiation of the superimposed light is measured by the measuring device 1040.

In the solar cell spectral response measuring apparatus 1000, the wavelength of monochromatic light to be superimposed is changed, and the measuring device 1040 measures an output electric current of the solar cell PV. In this way, a spectral response of the solar cell PV is measured by the DSR method.

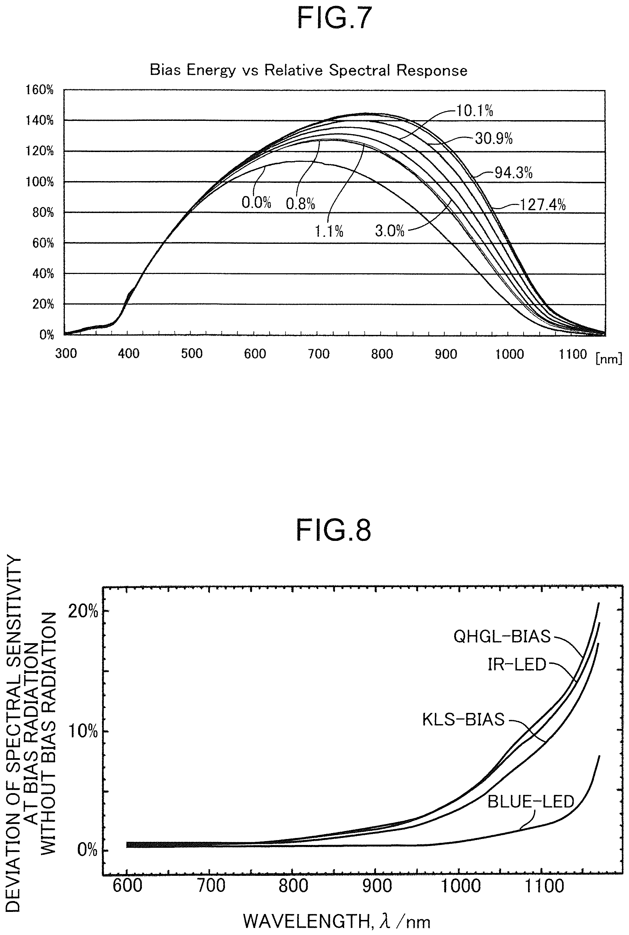

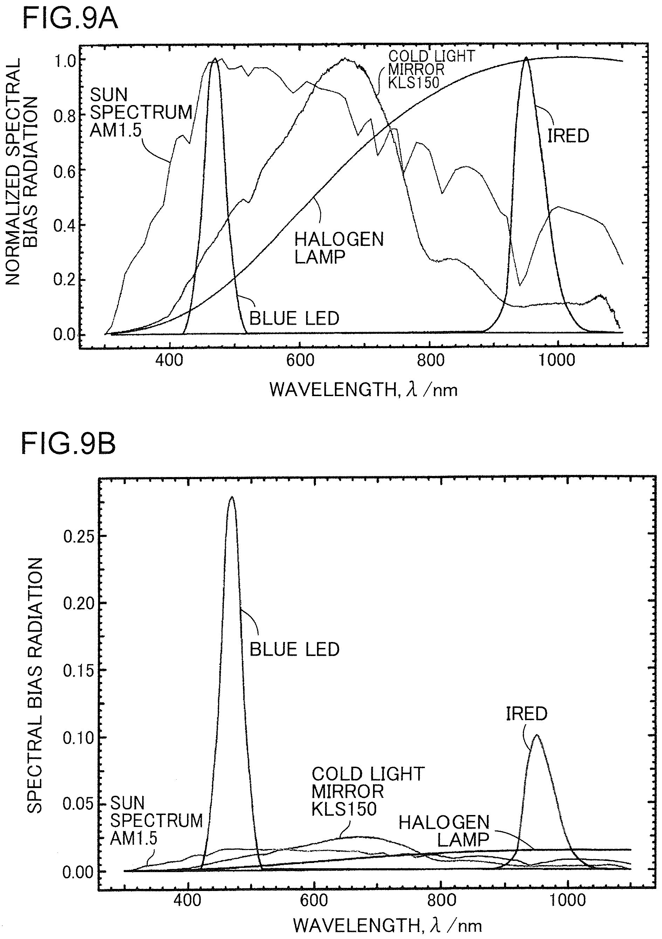

As described above, however, the spectral response of a solar cell is dependent upon the quantity of white bias light, and is also dependent upon the spectrum of bias light. In a solar cell shown in Fig. 7, for example, the spectral response of the solar cell rises as the quantity of white bias light increases in a wavelength range of approximately 500 nm or longer. In a solar cell shown in Fig. 8, however, the spectral response of a solar cell rises from a wavelength of approximately 750 nm, and becomes greater approximately 10 to 20 percent in a long wavelength range of approximately 1050 nm or longer, as can be seen from Fig. 9, for example, in the case of an infrared light emitting diode (IR-LED), a halogen lamp (QHGL-Bias), and a KSL light source (KSL-Bias), which have irradiation energy in a relatively long wavelength range. On the other hand, in a blue light emitting diode (blaue LED) having irradiation energy in a relatively short wavelength range, for example, the spectral response of a solar cell rises from a wavelength of approximately 950 nm but does not rise so much in a long wavelength range of approximately 1050 nm or longer, as can be seen from Fig. 9. The horizontal axes of the graphs shown in Fig. 7 to Fig. 9 indicate wavelengths in the unit of nanometer, and the vertical axes indicate variations in the unit of percent. Fig. 9A shows spectrums expressed by normalizing the spectrums shown in Fig. 9B at their peaks. As described above, there are solar cells having a spectral response dependence upon the quantity and the spectrum of bias light.

Accordingly, the solar cell spectral response measuring apparatus 1000 having the basic construction shown in Fig. 6 and using the DSR method has the likelihood of improperly measuring a solar cell having a spectral response dependence upon the quantity and the spectrum of bias light. Solar cell spectral response measuring apparatuses in accordance with the DSRmethod, which are described in the following embodiments, will solve these problems.

### (First Embodiment)

A solar cell spectral response measuring apparatus 1A according to a first embodiment of the present invention makes it possible to irradiate a plurality of types of bias light having different spectrums from one another, select a type of bias light among the plurality of types of bias light to measure a spectral response of a solar cell PV, and measure a spectral response of the solar cell PV under the selected bias light. The measurement under the selected bias light is conducted in a similar way to that of the solar cell spectral response measuring apparatus 1000 described with reference to Fig. 6. The solar cell spectral response measuring apparatus 1A according to the first embodiment irradiates a solar cell PV to be measured with the selected bias light to thereby cause a generation state that the solar cell PV generates an electricity or a biased state, then irradiates the solar cell PV in the biased state with monochromatic light to thereby measure a response (output electric current) at a wavelength of the monochromatic light, and then measures a spectral response of the solar cell PV under monochromatic light at changed wavelengths.

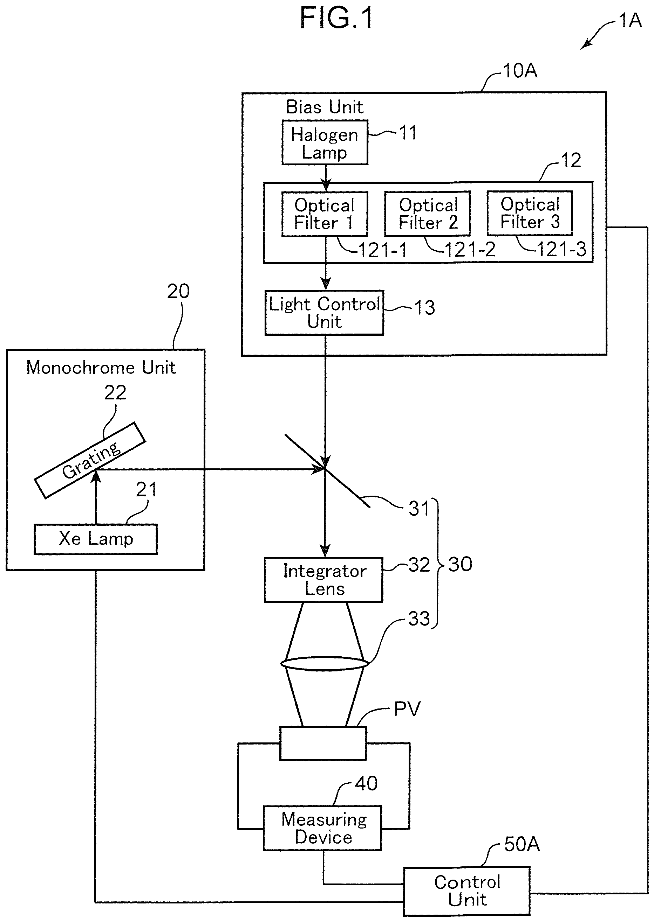

The solar cell spectral response measuring apparatus 1A according to the first embodiment includes, for example, as shown in Fig. 1, a bias unit 10A, a monochrome unit 20, an irradiating optical system 30, a measuring device 40, and a control unit 50A.

The bias unit 10A is a device which is capable of irradiating a plurality of types of bias light having different spectrums from one another, and includes, for example, a light source 11, an optical filter unit 12, and a light control unit 13.

The light source 11 is a light source which radiates light having a spectrum which is proper in view of spectrums for bias light and wavelength filtering characteristic of the optical filter unit 12 or like, and includes, for example, a halogen lamp, a xenon lamp, or the like. In this embodiment, the light source 11 includes a halogen lamp 11.

The optical filter unit 12 is a device which receives light radiated by the halogen lamp 11 of the light source 11, and emits the received light after converting the spectrum of the received light to a specified spectrum. The specified spectrum is, for example, a spectrum of light from a light source constituting an environment (supposed use environment) where a solar cell PV is supposed to be used. The light sources in the supposed use environment includes, for example, reference sunlight, an incandescent lamp, a fluorescent lamp (e.g., a daylight fluorescent lamp, a D50 fluorescent lamp or the like), a white LED lamp, and the like. In order to generate the plurality of types of bias light having different spectrums from one another, the optical filter unit 12 is provided with the same number of optical filters 121 as the plurality of types of bias light.

In this embodiment, the optical filter unit 12 is provided with first to third optical filters 121-1 to 121-3 to generate three types of bias light having spectrums corresponding to reference sunlight having AM 1.5, a daylight fluorescent lamp, and a white LED lamp, respectively.

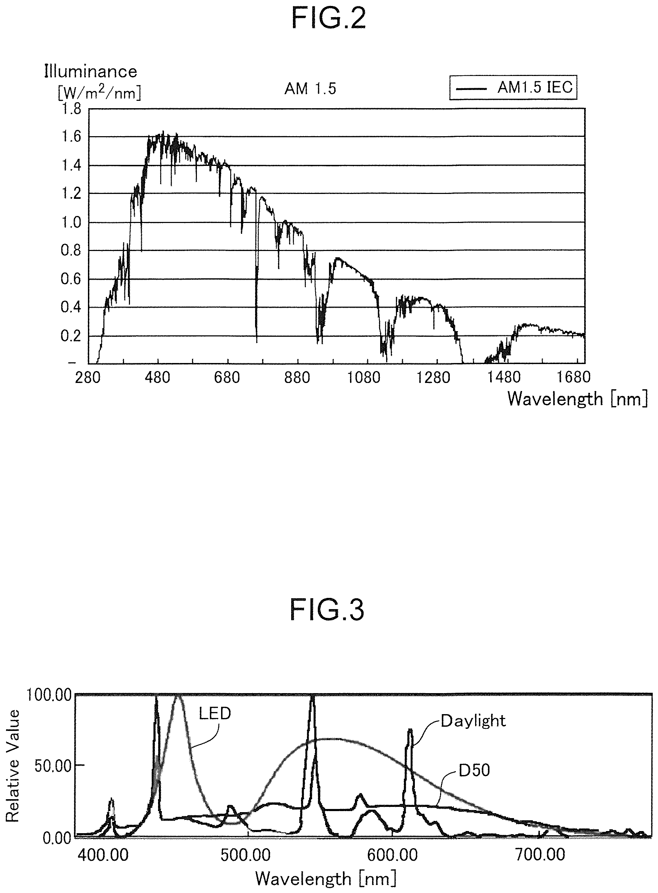

The first optical filter 121-1 includes an optical element having a filter wavelength characteristic that is able to permit the spectrum of light radiated by the light source 11 to change to the spectrum of reference sunlight having AM 1.5 that is shown in Fig. 2. The light radiated by the halogen lamp 11 of the light source 11 is incident upon the first optical filter 121-1, and the first optical filter 121-1 then emits light having a spectrum identical to the spectrum of the reference sunlight having AM 1.5.

The second optical filter 121-2 is an optical element having a filter wavelength characteristic that is able to permit the spectrum of light radiated by the light source 11 to change to the spectrum of light from a daylight fluorescent lamp that is shown in Fig. 3. The light radiated by the halogen lamp 11 of the light source 11 is incident upon the second optical filter 121-2, and the second optical filter 121-2 then emits light having a spectrum identical to the spectrum of light from a daylight fluorescent lamp.

The third optical filter 121-3 is an optical element having a filter wavelength property that is able to permit the spectrum of light radiated by the light source 11 to change to the spectrum of light from a white LED lamp that is shown in Fig. 3. The light radiated by the halogen lamp 11 of the light source 11 is incident upon the third optical filter 121-3, and the third optical filter 121-3 then emits light having a spectrum identical to the spectrum of light from a white LED lamp.

The first to third optical filters 121-1 to 121-3 are each made by suitably combining one or more filter elements, such as a colored-glass filter element, an optical thin-film filter element, and a dielectric multilayer filter element.

The horizontal axes of the graphs shown in Fig. 2 and Fig. 3 indicate the wavelength in the unit of nanometer, and the vertical axes thereof indicate the illuminance level. In Fig. 2, the illuminance level is expressed by the absolute value, while in Fig. 3, the illuminance level is expressed by the relative value normalized at the peak.

The light control unit 13 is an optical element which controls the quantity of emitted light, and includes, for example, an optical diaphragm, an ND filter and the like.

In the bias unit 10A, in order to generate bias light having a specified radiation spectrum, an optical filter 121 corresponding to the specified spectrum is selected to thereby filter the light radiated by the halogen lamp 11 of the light source 11, and the light control unit 13 controls the quantity of the filtered light to a specified sufficient quantity for irradiation of the solar cell PV to be measured, and emits the filtered light to the irradiating optical system 30.

The monochrome unit 20 is a device which irradiates a plurality of types of monochromatic light having different wavelengths from one another, for example, a spectroscope, and includes a light source 21 and a diffraction grating 22.

The light source 21 is a light source which radiates light having a wavelength range which is proper for wavelengths (e.g., 300-1200 nm) of the plurality of types of monochromatic light and diffraction characteristics of the diffraction grating 22 and the like, and includes, for example, a xenon lamp 21. The diffraction grating 22 is an optical element which diffracts the light radiated by the xenon lamp 21 of the light source 21 to generate monochromatic light.

In the monochrome unit 20, in order to generate and emit monochromatic light having a specified wavelength, the light radiated by the xenon lamp 21 of the light source 21 is incident upon the diffraction grating 22, and is then diffracted. The diffracted light having an order corresponding to the specified wavelength is emitted to the irradiating optical system 30 through an emission slit (not shown) or the like.

The irradiating optical system 30 is an optical system where monochromatic light emitted from the monochrome unit 20 is superimposed on bias light emitted from the bias unit 10A, and the superimposed light is irradiated to the solar cell PV to be measured. The irradiating optical system 30 includes, for example, a half mirror 31 which superimposes light in an incident direction on light in a different incident direction, and emits the superimposed light in a specified direction, an integrator lens 32 which makes the incident light to have a uniform illuminance distribution and emits it, and a condensing optical system 33 which emits the incident light in a converged form. The integrator lens 32 may be removed in the case that the illuminance distribution is not required to be adjusted, and the condensing optical system 33 may be removed in the case that the condensation is unnecessary.

In the irradiating optical system 30, bias light emitted from the bias unit 10A and monochromatic light emitted from the monochrome unit 20 are incident upon the half mirror 31, and the half mirror 31 superimposes the monochromatic light on the bias light, and emits the superimposed light to the integrator lens 32. The integrator lens 32 uniforms the illuminance distribution of the superimposed light incident thereon, and emits the superimposed light to the condensing optical system 33. The condensing optical system 33 condenses the superimposed light incident thereupon and having the uniform illuminance distribution, and then irradiates the condensed light to the solar cell PV to be measured.

In the above-described embodiment, the half mirror 31 superimposes monochromatic light emitted from the monochrome unit 20 on the bias light emitted from the bias unit 10A. However, another arrangement may be employed. For example, a solar cell spectral response measuring apparatus 1A may be constructed in such a way that the bias light irradiating area of a solar cell PV to be measured that is irradiated with bias light emitted from a bias unit 10A is further irradiated with monochromatic light emitted from a monochrome unit 20. More specifically, for example, in the solar cell spectral response measuring apparatus 1A, the bias light emitted from the bias unit 10A is incident upon a measurement surface of a solar cell PV to be measured in a direction oblique to the measurement surface, and the monochromatic light emitted from the monochrome unit 20 is incident upon the area being irradiated with the bias light in a direction (normal direction) perpendicular to the measurement surface.

The measuring device 40 is a device which measures an output electric current of the solar cell PV to be measured for the monochromatic light having a wavelength, and measures a spectral response of the solar cell PV by the DSR method.

The measuring device 40 measures an electric current generated in the solar cell PV irradiated with the superimposed light having the uniform illuminance distribution.

The control unit 50A is a device which controls the components of the solar cell spectral response measuring apparatus 1A in accordance with their respective functions.

The control unit 50A selects an optical filter 121 among the plurality of optical filters provided in the optical filter unit 12 of the bias unit 10A, three or first to third optical filters 121-1 to 121-3 in this embodiment, in accordance with an instruction inputted by an input portion (not shown), and controls the optical filter unit 12 in such a way that light radiated by the light source 11 is incident upon the light control unit 13 through the selected optical filter 121.

For example, the optical filter unit 12 includes a rotary plate having first to third openings formed at a predetermined interval in a circumferential direction, and into which the first to third optical filters 121-1 to 121-3 are fitted respectively, and a motor for driving the rotary plate to rotate. In the solar cell spectral response measuring apparatus 1A, the control unit 50A controls the motor to thereby rotate the rotating plate by a predetermined amount so that light radiated by the light source 11 is incident upon the light control unit 13 through a selected optical filter 121. The solar cell spectral response measuring apparatus 1A may be made to have this construction.

Alternatively, the solar cell spectral response measuring apparatus 1A according to the first embodiment may be constructed so as to allow an operator to select a desired optical filter 121 among the plurality of optical filters 121 in the optical filter unit 12 of the bias unit 10A to thereby lead light radiated by the light source 11 to the light control unit 13 through the selected optical filter 121.

Furthermore, the control unit 50A controls the monochrome unit 20 in such a way that the monochrome unit 20 radiates monochromatic light and changes the wavelength of the monochromatic light. The control unit 50A controls the measuring device 40 in such a way that the measuring device 40 measures an output electric current of the solar cell PV under the monochromatic light having each of the changed wavelengths, and calculates a spectral response of the solar cell PV by the DSR method after the measurement under the monochromatic light having the changed wavelengths is completed.

In the thus constructed solar cell spectral response measuring apparatus 1A, a solar cell PV to be measured is set in a predetermined position. After receiving an instruction to start measurement from the unillustrated input portion and an instruction to select an optical filter 121 in the optical filter unit 12, to emit bias light having a radiation spectrum corresponding to the selection instruction from the bias unit 10A, the control unit 50A controls the bias unit 10A in such a way that light radiated by the light source 11 is incident upon the light control unit 13 through the optical filter 121 corresponding to the selection instruction. The control unit 50A controls the bias unit 10A to turn on the halogen lamp 11 serving as the light source 11. Next, the control unit 50A controls the monochrome unit 20 in such a way that the monochrome unit 20 emits monochromatic light having an initial one of a series of wavelengths to be changed at a specified wavelength interval (e.g., 10 nm, 20 nm, or the like) within a specified wavelength range (e.g., 300 to 1200 nm, or the like). In the thus constructed monochrome unit 20, the wavelength of monochromatic light is changed by varying the angle of incidence of light incident upon the diffraction grating 22. The control unit 50A controls the monochrome unit 20 to turn on the xenon lamp 21 as the light source 21.

In accordance with the control, the bias unit 10A emits the bias light having the radiation spectrum corresponding to the selection instruction to the irradiating optical system 30, and the monochrome unit 20 emits the monochromatic light having the initial wavelength to the irradiating optical system 30. In the irradiating optical system 30, the half mirror 31 superimposes the bias light from the bias unit 10A and the monochromatic light from the monochrome unit 20 on each other, and emits the superimposed light to the integrator lens 32. The integrator lens 32 makes the illuminance distribution of the superimposed light from the half mirror 31 uniform, and emits the uniformed superimposed light to the condensing optical system 33. The condensing optical system 33 condenses the superimposed light from the integrator lens 32, and irradiates the solar cell PV with the condensed superimposed light.

The solar cell PV to be measured receives the condensed superimposed light, and generates electric power depending on the superimposed light owing to the photovoltaic effect. The measuring device 40 measures an electric current outputted from the solar cell PV based on the generated electric power.

Upon completing the measurement of the monochromatic light having the initial wavelength, to measure monochromatic light having a subsequent wavelength, the control unit 50A controls the monochrome unit 20 to emit the monochromatic light having the subsequent wavelength, and controls the measuring device 40 to measure an output electric current from the solar cell PV receiving the superimposed light containing the monochromatic light having the subsequent wavelength. Until monochromatic light having a final wavelength, the identical operation is repeated that the wavelength of monochromatic light is changed at a specified wavelength interval within a specified wavelength range, and an output electric current of the solar cell PV receiving the superimposed light containing monochromatic light having the changed wavelength is measured.

In order to more clearly distinguish a bias light attribution and a monochromatic light attribution with respect to the output electric current from each other, alternatively, the solar cell spectral response measuring apparatus 1A may be provided with the construction that the monochrome unit 20 radiates monochromatic light in the form of pulses cyclically at a predetermined interval, and the measuring device 40 has a lock-in amplifier in synchronism with the predetermined interval, whereby measuring an output electric current of a solar cell PV receiving superimposed light containing monochromatic light by use of the lock-in amplifier.

Upon completion of the measurement under the monochromatic light, the measuring device 40 calculates a spectral response of the solar cell PV under another bias light instead of white bias light by the DSR method, and the calculated spectral response of the solar cell PV is sent to an unillustrated output portion.

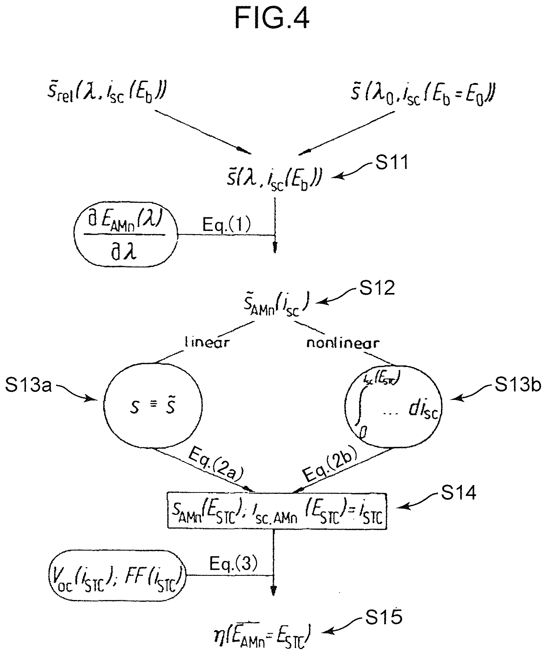

The DSR method is described in detail in the manner of using white bias light in the earlier-mentioned Non-Patent Document 1, and its flow is roughly shown in Fig. 4. In this embodiment, the DSR method is conducted using the above-mentioned bias light in place of white bias light.

As described above, the solar cell spectral response measuring apparatus 1A of this embodiment includes the bias unit 10A capable of changing the radiation spectrum of bias light. Hence, a spectral response of a solar cell can be measured under each of a plurality of types of bias light having different radiation spectrums from one another. Accordingly, the solar cell spectral response measuring apparatus 1A of the embodiment enables the radiation spectrum of bias light to correspond to the spectrum of light constituting an environment where a solar cell is actually used, for example, the spectrum of light from an incandescent lamp, a white LED lamp, or the like. Accordingly, it is possible to more precisely obtain a spectral response of a solar cell which is to be used in actual environment.

Particularly, in the case that a solar cell PV to be measured has at least a spectral response dependence upon a variation in the spectrum of bias light, the solar cell spectral response measuring apparatus 1A of this embodiment can perform more effectively, and be preferably utilized. Moreover, the solar cell spectral response measuring apparatus 1A of the embodiment can more precisely measure a spectral response of a solar cell PV having at least a spectral response dependence upon a variation in the spectrum of bias light.

Furthermore, in the solar cell spectral response measuring apparatus 1A of this embodiment, the bias unit 10A is realized by a relatively simple construction having a plurality of optical filters 121.

Moreover, the solar cell spectral response measuring apparatus 1A of this embodiment, because of using the DSR method, can more precisely measure a spectral response of even a solar cell PV to be measured which is dependent upon a variation in the quantity of bias light. In the case where the spectral response of a solar cell is independent of bias light, the solar cell spectral response measuring apparatus 1A may permitted to measure a spectral response of the solar cell without employing the DSR method, but by allowing an operator to adjust the quantity of light from the light control unit 13 to a specified light quantity.

### (Second Embodiment)

Next, a second embodiment is described. The solar cell spectral response measuring apparatus 1A according to the first embodiment includes the bias unit 10A provided with the light source 11, and the plurality of optical filters 121 which receive light radiated by the light source 11 and emit the received light at different spectrums from one another, three optical filters 121-1 to 121-3 as shown in Fig. 1. A solar cell spectral response measuring apparatus 1B according to the second embodiment includes a bias unit 10B instead of the bias unit 10A, the bias unit 10B having a plurality of light sources 141 which radiate light having different spectrums from one another.

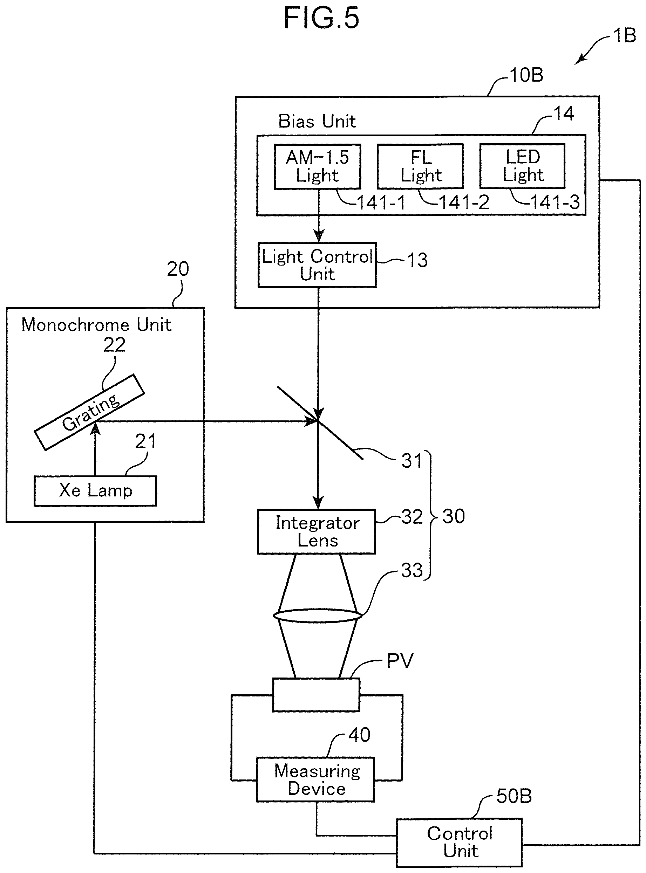

The solar cell spectral response measuring apparatus 1B according to the second embodiment includes, for example, as shown in Fig. 5, the bias unit 10B, a monochrome unit 20, an irradiating optical system 30, a measuring device 40, and a control unit 50B. In the solar cell spectral response measuring apparatus 1B according to the second embodiment, the monochrome unit 20, the irradiating optical system 30, and the measuring device 40 are identical to the monochrome unit 20, the irradiating optical system 30, and the measuring device 40 of the solar cell spectral response measuring apparatus 1A according to the first embodiment, and description about them is omitted.

The bias unit 10B is a device which irradiates bias light at a plurality of different spectrums from one another, and includes, for example, the plurality of light sources 141, and a light control unit 13. The plurality of light sources 141 are, for example, light sources exactly constituting an environment (supposed use environment) where a solar cell PV is supposed to be used. The plurality of light sources 141 include, for example, a solar simulator radiating reference sunlight having AM 1.5, an incandescent lamp, a fluorescent lamp (e.g., a daylight fluorescent lamp, a D50-fluorescent lamp, and the like), a white LED lamp, and the like. In this embodiment, the bias unit 10B is provided with three light sources 141, that is, a solar simulator (AM-1.5 Light)141-1 radiating reference sunlight having AM 1.5, a daylight fluorescent lamp (FL Light) 141-2, and a white LED lamp (LED Light) 141-3.

The light control unit 13 which is similar to the light control unit 13 of the bias unit 10A in the first embodiment is an optical element for controlling the quantity of light to be emitted, and includes, for example, an optical diaphragm, an ND filter, and the like.

In the bias unit 10B, to emit bias light having a specified radiation spectrum, first, a light source 141 is selected that has a specified radiation spectrum. The light control unit 13 controls the quantity of light radiated from the selected light source 141 so that the solar cell PV to be measured can be irradiated at a specified quantity of light, and then emits the controlled light to the irradiating optical system 30.

The control unit 50B controls components of the solar cell spectral response measuring apparatus 1B so as to perform their respective functions.

The control unit 50B selects a light source 141 among the plurality of light sources in the bias unit 10B, three light sources 141-1 to 141-3, according to an instruction inputted by the way of an unillustrated input portion, and controls the bias unit 10B so as to turn on the selected light source 141 to allow the bias light radiated from the selected light source 141 to fall on the light control unit 13. Alternatively, in a similar way to the first embodiment, the solar cell spectral response measuring apparatus 1B according to the second embodiment may be constructed so as to allow an operator to select and turn on a desired light source 141 among the plurality of light sources 141 in the bias unit 10B in a manual way, and to allow the bias light radiated from the selected light source 141 to fall on the light control unit 13.

Furthermore, the control unit 50B controls the monochrome unit 20 so as to turn on to radiate monochromatic light by changing the wavelength of the monochromatic light. The control unit 50B controls the measuring device 40 so as to measure an output electric current of the solar cell PV under the monochromatic light having a changed wavelength. After the measurement under the monochromatic light having changed wavelengths, the control unit 50B controls the measuring device 40 so as to calculate a spectral response of the solar cell PV by the DSR method.

The solar cell spectral response measuring apparatus 1B according to the second embodiment having the above-mentioned construction, measures a spectral response of a solar cell PV by the identical operations to those of the solar cell spectral response measuring apparatus 1A according to the first embodiment, except for the operations that the selection of a light source 141 is executed in place of the selection of an optical filter 121 in the bias unit 10A of the first embodiment, and the turning on of the selected light source 141 is executed in place of the turning on of the light source 11 of the bias unit 10A of the first embodiment.

As described above, the solar cell spectral response measuring apparatus 1B according to this embodiment includes the bias unit 10B capable of changing the radiation spectrum for bias light, which hence makes it possible to measure a spectral response of a solar cell under each of a plurality of types of bias light having different radiation spectrums from one another.

Particularly, to obtain a desired radiation spectrum, the solar cell spectral response measuring apparatus 1B according to this embodiment makes it possible to use a light source exactly constituting an environment where a solar cell is used. Hence, a spectral response of a solar cell in the actually use environment can be measured at an extremely high precise. Accordingly, in the case that a solar cell PV to be measured has at least a spectral response dependence upon a variation in the spectrum of bias light, the solar cell spectral response measuring apparatus 1B of this embodiment can perform more effectively, and be preferably utilized.

Moreover, the solar cell spectral response measuring apparatus 1B according to this embodiment, because of using the DSR method, can more precisely measure a spectral response of even a solar cell PV which has a spectral response dependence upon a variation in the quantity of bias light.

Herein, the technologies of various aspects are above disclosed, and the principal technologies are then summarized as follows.

A solar cell spectral response measuring apparatus according to an aspect of the present invention is adapted for measuring a spectral response of a solar cell to be measured, and comprises: a bias unit for irradiating bias light to the solar cell; a monochrome unit for irradiating monochromatic light to the solar cell in superimposition on the bias light irradiated by the bias unit while allowing the wavelength of the monochromatic light to be changeable; and a measuring device for measuring an output of the solar cell under the monochromatic light irradiated by the monochrome unit having a changed wavelength to thereby measure a spectral response of the solar cell based on the measured output, wherein the bias unit having a construction of allowing the radiation spectrum of the bias light to be changed.

The solar cell spectral response measuring apparatus includes the bias unit capable of changing the radiation spectrum of the bias light makes it possible to measure a spectral response of a solar cell under each of a plurality of types of bias light having different radiation spectrums from one another. In the solar cell spectral response measuring apparatus, the radiation spectrum is made to correspond to the spectrum of light constituting an environment where a solar cell is to be used. Therefore, a spectral response of a solar cell to be used in the environment can be measured at an increased accuracy.

In another aspect of the present invention, it is preferable that the solar cell spectral response measuring apparatus is adapted to measure a spectral response of a solar cell having at least a spectral response dependence upon a variation in the spectrum of bias light.

According to this construction, for a solar cell to be measured has at least a spectral response dependence upon a variation in the spectrum of bias light, the solar cell spectral response measuring apparatus can execute its performance more effectively, and be desirably utilized.

In still another aspect of the present invention, in the solar cell spectral response measuring apparatus, the bias unit includes: a light source; and a plurality of optical filters for receiving light radiated by the light source and emitting the received light in different spectrums from one another.

According to this construction, the bias unit can be realized by a relatively simple construction where a plurality of optical filters are merely provided.

In still another aspect of the present invention, in the solar cell spectral response measuring apparatuses, the bias unit includes a plurality of light sources for radiating light having different spectrums from one another.

The solar cell spectral response measuring apparatus is provided with the plurality of light sources makes it possible to a spectral response of a solar cell under a light source corresponding to one of the light sources at an increased accuracy.

In still another aspect of the present invention, the solar cell spectral response measuring apparatuses may be preferably made to measure a spectral response of a solar cell by the DSR method (differential spectral responsivity method).

According to this construction, the solar cell spectral response measuring apparatus which uses the DSR method can measure a spectral response of even a solar cell having a spectral response dependence upon a variation in the quantity of bias light.

### Industrial Applicability

The present invention can provide a solar cell spectral response measuring apparatus which measures a spectral response of a solar cell.

## Claims

1. A solar cell spectral response measuring apparatus which measures a spectral response of a solar cell (PV) to be measured, comprising:
a bias unit (10A, 10B) adaptable to emit a plurality of types of bias light having spectrums different from one another, the bias unit emitting one of the plurality of types of bias light in order to irradiate a solar cell to be measured;
a monochrome unit (20) for emitting monochromatic light in order to irradiate the solar cell to be measured in superimposition on while changing the wavelength of the monochromatic light; and
a measuring device (40) for measuring an output of the solar cell under the monochromatic light emitted from the monochrome unit having a changed wavelength and the bias emitted from the bias unit to thereby measure a spectral response of the solar cell (PV) based on the measured output;
wherein the irradiation spectrum of each type of the bias light to be emitted from the bias unit (10A, 10B) corresponds to an irradiation spectrum of light emitted from an irradiation light source constituting an environment where the solar cell (PV) is used.

2. The solar cell spectral response measuring apparatus according to claim 1, wherein the solar cell to be measured has at least a spectral response dependence upon a variation in the spectrum of bias light.

3. The solar cell spectral response measuring apparatus according to claim 1 or 2, wherein the bias unit includes:
a light source (11); and
a plurality of optical filters (121) for receiving light radiated by the light source (11), and emitting the received light in different spectrums from one another.

4. The solar cell spectral response measuring apparatus according to claim 1 or 2, wherein the bias unit includes a plurality of light sources (141) for radiating light having different spectrums from one another.

5. The solar cell spectral response measuring apparatus according to any one of claims 2 to 4, wherein the measuring device (40) measures a spectral response of the solar cell to be measured by the differential spectral responsivity (DSR) method based on the measured output.

## Patentansprüche

1. Solarzellen-Spektralempfindlichkeits--Messvorrichtung, die eine spektrale Empfindlichkeit einer zu messenden Solarzelle (PV) misst, umfassend:
eine Vorspannungseinheit (10A, 10B), die dazu anpassbar ist, eine Mehrzahl von Arten von Vorspannungslicht zu emittieren, das voneinander verschiedene Spektren hat, wobei die Vorspannungseinheit eine der Mehrzahl von Arten von Vorspannungslicht emittiert, um eine zu messende Solarzelle zu bestrahlen;
eine Monochromeinheit (20) zum Emittieren von monochromatischem Licht, um die zu messende Solarzelle in Überlagerung zu bestrahlen, während die Wellenlänge des monochromatischen Lichts verändert wird; und
eine Messeinrichtung (40) zum Messen einer Ausgabe der Solarzelle unter dem monochromatischen Licht, das von der Monochromeinheit emittiert wird, das eine veränderte Wellenlänge hat, und die Vorspannung, die von der Vorspannungseinheit emittiert wird, um dadurch eine spektrale Empfindlichkeit der Solarzelle (PV) auf Basis der gemessenen Ausgabe zu messen;
wobei das Bestrahlungsspektrum von jeder Art des Vorspannungslichts, das von der Vorspannungseinheit (10A, 10B) emittiert wird, einem Bestrahlungsspektrum von Licht entspricht, das von einer Bestrahlungs-Lichtquelle emittiert wird, die eine Umgebung bildet, wo die Solarzelle (PV) verwendet wird.

2. Solarzellen-Spektralempfindlichkeits-Messvorrichtung nach Anspruch 1, wobei die zu messende Solarzelle zumindest eine Spektralempfindlichkeitsabhängigkeit auf eine Variation des Spektrums des Vorspannungslichts hin hat.

3. Solarzellen-Spektralempfindlichkeits-Messvorrichtung nach Anspruch 1 oder 2, wobei die Vorspannungseinheit beinhaltet:
eine Lichtquelle (11); und
eine Mehrzahl von optischen Filtern (121) zum Empfangen von Licht, das von der Lichtquelle (11) ausgestrahlt wird, und zum Emittieren des empfangenen Lichts in voneinander verschiedenen Spektren.

4. Solarzellen-Spektralempfindlichkeits-Messvorrichtung nach Anspruch 1 oder 2, wobei die Vorspannungseinheit eine Mehrzahl von Lichtquellen (141) zum Ausstrahlen von Licht beinhaltet, das voneinander verschiedene Spektren hat.

5. Solarzellen-Spektralempfindlichkeits-Messvorrichtung nach einem der Ansprüche 2 bis 4, wobei die Messeinrichtung (40) eine spektrale Empfindlichkeit der zu messenden Solarzelle mittels des Differential-Spektral-Empfindlichkeitsverfahrens (DSR) auf Basis der gemessenen Ausgabe misst.

## Revendications

1. Appareil de mesure de réponse spectrale de cellule solaire qui mesure une réponse spectrale d'une cellule solaire (PV) à mesurer, comprenant :
une unité de polarisation (10A, 10B) adaptable pour émettre une pluralité de types de lumière de polarisation ayant des spectres différents les uns des autres, l'unité de polarisation émettant l'un de la pluralité de types de lumière de polarisation afin d'irradier une cellule solaire à mesurer;
une unité monochrome (20) pour émettre de la lumière monochromatique afin d'irradier la cellule solaire à mesurer en superposition tout en changeant la longueur d'onde de la lumière monochromatique ; et
un dispositif de mesure (40) pour mesurer une sortie de la cellule solaire sous la lumière monochromatique émise par l'unité monochrome ayant une longueur d'onde changée et la polarisation émise par l'unité de polarisation pour mesurer ainsi une réponse spectrale de la cellule solaire (PV) basée sur la sortie mesurée ;
dans lequel le spectre d'irradiation de chaque type de lumière de polarisation à émettre à partir de l'unité de polarisation (10A, 10B) correspond à un spectre d'irradiation de lumière émise par une source lumineuse d'irradiation constituant un environnement dans lequel la cellule solaire (PV) est utilisée.

2. Appareil de mesure de réponse spectrale de cellule solaire selon la revendication 1, dans lequel la cellule solaire à mesurer a au moins une dépendance de réponse spectrale à une variation du spectre de lumière de polarisation.

3. Appareil de mesure de réponse spectrale de cellule solaire selon la revendication 1 ou 2, dans lequel l'unité de polarisation comprend :
une source lumineuse (11) ; et
une pluralité de filtres optiques (121) pour recevoir de la lumière émise par la source lumineuse (11), et émettre la lumière reçue dans des spectres différents les uns des autres.

4. Appareil de mesure de réponse spectrale de cellule solaire selon la revendication 1 ou 2, dans lequel l'unité de polarisation comprend une pluralité de sources lumineuses (141) pour émettre de la lumière ayant des spectres différents les uns des autres.

5. Appareil de mesure de réponse spectrale d'une cellule solaire selon l'une quelconque des revendications 2 à 4, dans lequel le dispositif de mesure (40) mesure une réponse spectrale de la cellule solaire à mesurer par la méthode de sensibilité spectrale différentielle (DSR) sur la base de la sortie mesurée.
